## Europäisches Patentamt
## European Patent Office
## Office européen des brevets

(19)

(11) Publication number: **0 296 144**
**A1**

(12)

# EUROPEAN PATENT APPLICATION

(21) Application number: **88870107.5**

(22) Date of filing: **15.06.88**

(51) Int. Cl.⁴: **A 23 L 2/06**
**A 23 L 1/212**

(30) Priority: **15.06.87 US 62301**

(43) Date of publication of application:
**21.12.88 Bulletin 88/51**

(84) Designated Contracting States:
**AT BE CH DE ES FR GB GR IT LI LU NL SE**

(71) Applicant: **THE PROCTER & GAMBLE COMPANY**
**One Procter & Gamble Plaza**
**Cincinnati Ohio 45202 (US)**

(72) Inventor: **Kolodesh, Michael Sulya**
**6696 Greentree Dr.**
**Cincinnati, OH 45224 (US)**

**Toms, Douglas**
**4322 Tower Av.**
**St. Bernard, OH 45217 (US)**

**Baird, James Clark**
**5465 Kirby Av. Apt. 15**
**Cincinnati, OH 45223 (US)**

**Weinshenker, Eugene**
**9771 Flattop Drive**
**Cincinnati, OH 45239 (US)**

**Japikse, Cornelis Hendrikus**
**652 Flagstaff Drive**
**Wyoming, OH 45215 (US)**

(74) Representative: **Canonici, Jean-Jacques et al**
**Procter & Gamble European Technical Center N.V.**
**Temselaan 100**
**B-1820 Strombeek-Bever (BE)**

(54) Compositions made with natural citrus juice and juice sacs.

(57) The present invention relates to a mixture comprising natural citrus juice and juice sacs, wherein the mixture comprises from about 1% to about 99% juice sacs and from about 99% to about 1% free juice. The peel oil level of the free juice is less than about 0.007%, and the glycosides level of the free juice is less than about 120 mg./100 ml. The mixtures of the present invention can be used to make citrus beverages and various food products.

EP 0 296 144 A1

**Description**

## COMPOSITIONS MADE WITH NATURAL CITRUS JUICE AND JUICE SACS

### Field of the Invention

The present invention relates to mixtures containing natural citrus juice and juice sacs. The mixtures can be used to make beverages and food products.

### Background of the Invention

Hand-squeezed citrus juice typically contains solids comprising mostly ruptured juice sacs or vesicles and some whole juice sacs. The solids enhance the organoleptic properties and freshness perception of the fresh juice.

Commercial citrus juices are normally extracted in such a way that the juice contains considerable amounts of undesirable, fibrous materials. These materials are a mixture of fragments of the interior layer of the peel (albedo), the fibrous core of the orange, and the membranes surrounding and partitioning the segments of the citrus fruit (rag) which contain the seeds. This material is generally separated from the juice, screened or comminuted to produce a solid having a relatively consistent particle size and then added back to the final juice. This is known in the trade as "pulp".

It is an object of the present invention to make a solids-containing citrus product having a taste and mouthfeel similar to or better than is found in a freshly extracted hand-squeezed juice through the addition of juice sacs without undesirable fibers.

A number of references disclose methods for separating whole citrus juice sacs that can be used to make beverages. For example, U.S. Patent 4,294,861 of Ifuku et al., issued October 13, 1981, discloses a method and apparatus for processing citrus fruits into a drink containing citrus juice and separate juice vesicles or sacs. Citrus fruit is cut in half and transported on a conveying apparatus. A fluid such as compressed air or water is injected against the fruit half, causing separate juice sacs to come free from the peel and membrane. The juice sacs are then added to juice to make a drink.

U.S. Patent 3,246,993 of Webster et al., issued April 19, 1966, describes a method for preparing discrete juice sacs. Citrus fruit is peeled and then immersed in a very cold liquid. The liquid causes separate parts of the fruit to shatter from thermal shock. Individual juice sacs can then be easily separated from each other. The juice sacs can be added to a single-strength citrus juice to make a beverage.

U.S. Patent 2,510,679 of Bruce, issued June 6, 1950, discloses a process for isolating whole and ruptured juice sacs from citrus fruits. Citrus fruit is cored and halved, and turned inside out. The pulp is scraped from the rind, and then separated into whole and ruptured juice sacs. The sacs are combined with citrus juice to make a drink.

U.S. Patent 4,560,572 of Watanabe, issued December 24, 1985, discloses a method for separating whole citrus sacs. Citrus fruit is soaked in hot water, peeled and segmented. The segments are soaked in acid, soaked in alkali, and then separated into individual juice sacs by mechanical agitation in water. The juice sacs can be used in various drinks.

These patents are silent on the quality of the juice/juice sac mixture. However, there are apparent drawbacks associated with the processes used for juice/juice sac separation. For example, in the Bruce process the pulp is mechanically scraped from the rind, likely resulting in contamination of the juice with peel oil. The hot water soaking and acid and alkali treatments used in the Watanabe process are thought to contribute to flavor changes, reduced naturalness and degradation of the citrus product. Similarly, the cold immersion and indiscriminate shattering will be damaging to the Webster juice sacs and cause a greater release of pulp bound enzymes.

It is, therefore, an object of the present invention to provide a citrus product that has a taste and mouthfeel similar to or better than fresh-squeezed juice.

It is another object of the present invention to make beverages and foods that contain the present citrus product.

These and other objects of the invention will become evident from the disclosure herein.

All percentages are by weight unless otherwise defined.

### Summary of the Invention

The present invention relates to a mixture comprising natural citrus juice and juice sacs, wherein the mixture

0 296 144

comprises from about 1% to about 99% juice sacs and from about 99% to about 1% free juice. The peel oil level of the free juice is less than about 0.007%, and the glycosides level of the free juice is less than about 120 mg./100 ml. The mixtures of the present invention can be used to make citrus beverages and various food products.

## Definitions

By "free juice" as used herein is meant the liquid that passes through a 20-mesh screen. By "juice sacs" as used herein is meant the materials retained on a 20-mesh screen, including whole juice sacs with entrapped juice, whole empty juice sacs, and juice sac fragments. By "whole juice sacs" is meant whole sacs with entrapped juice and whole empty juice sacs.

## Detailed Description of the Invention

A new citrus fruit product has been developed, made from free citrus juice and citrus juice sacs. Through juice sac level adjustment, the product can be delivered in a variety of forms ranging from a juice exhibiting superior flavor and texture over conventional juices, to a thicker, edible form which combines the qualities of drinking citrus juice and eating citrus fruits to give a unique sensory experience. The juice sacs are the same size, shape, and texture, and the juice contained in the whole sacs is as fresh and natural tasting as the sacs and juice contained in whole citrus fruits. The free juice tastes fresh and unadulterated like hand-squeezed juice and it is more readily available to the senses than juice in citrus sections, providing greater aromatic and flavor impact.

The present product is substantially free of the undesirable materials normally found in citrus juice (peel oil and fibrous materials such as membrane pieces) or citrus sections (albedo and membrane pieces).

The new product is made by a careful dissecting process which first carefully peels the citrus fruit, then separates the juice sacs from the rag, seeds and membrane and from each other. This gentle mechanical process releases minimal enzymes and bitter principles such as the limonin precursor from their normal restraint in the juice sacs, seeds, pith and membrane. The low enzyme level gives increased stability to the unpasteurized product. The product may be gently pasteurized to further increase its shelf stability.

The present product can be used as an enhancer for conventional concentrated or single-strength juices, as an ingredient for other kinds of foods and beverages, or as a product in its own right.

Specifically, the present invention is a mixture comprising natural citrus juice and juice sacs, wherein the mixture comprises from about 1% to about 99% juice sacs and from about 1% to about 99% free juice, wherein the peel oil level of the free juice is less than about 0.007%, and wherein the glycosides level in the free juice is less than about 120 mg./100 ml.

The free juice from the mixture will preferably have a peel oil content of less than about 0.005%. Too much peel oil can be detrimental to the flavor of a citrus beverage. It imparts a bitter, astringent flavor that is excessively aromatic and intense.

Glycosides are substituted complex sugars. Higher levels of glycosides have been found to indicate mechanical abuse of the juice during processing. The glycosides level of the free juice of the present invention is lower than the level in other commercial juices: the level is less than about 120 mg./100 ml., preferably less than about 110 mg./100 ml., and most preferably less than about 100 mg./100 ml.

The present unpasteurized citrus products are further defined by the size of the solids present in the free juice. These solids consist primarily of sinking pulp, pulp in the size range of about 30-800 microns. The products of this invention are not subjected to a treatment that grinds up a lot of solids. Hence, the particles are on average larger in size than, for example, the particles in a similar commercial citrus juice. The sinking pulp in the free unpasteurized juice of the present invention preferably has a mean diameter of greater than about 250 microns, more preferably greater than about 275 microns, and most preferably greater than about 300 microns.

The juice made by the present process is also more like hand-squeezed juices in viscosity. The viscosity of the free juice is preferably less than about 8 cps at 8°C (46.4°F), more preferably less than about 7 cps, and most preferably less than about 6 cps.

As discussed above, the citrus product of the present invention is low in enzymes, particularly pectinesterase. The pectinesterase level of the free, unpasteurized juice is preferably less than about 2 PEu/°Brix, more preferably less than about 1.5 PEu/°Brix, and most preferably less than about 1.0 PEu/°Brix.

Moreover, the present citrus product is also closer to the fresh fruity taste of fresh-squeezed juice than typical commercially processed juices. This excellent taste is indicated by the levels and ratios of several volatile flavors in the citrus product. The level of acetaldehyde will preferably be from about 5 ppm to about 10 ppm, the level of ethyl butyrate from about 0.4 ppm to about 1.0 ppm, the level of valencene from about 5 ppm to about 20 ppm, and the level of limonene from about 15 ppm to about 40 ppm. Preferably, the ratio of limonene to acetaldehyde is less than about 10, the ratio of limonene to ethyl butyrate is less than about 100,

3

and the ratio of limonene to valencene is less than about 10.

The present development is particularly applicable to citrus products made from oranges, but it is not limited thereto. The present invention can use any of a variety of citrus fruits, or mixtures of citrus fruits. For example, the citrus fruit can be selected from the group consisting of oranges, grapefruits, lemons, tangerines, limes, kumquats, and mixtures thereof.

Either Valencia oranges or non-Valencia oranges can be used. As used herein, "Valencia oranges" refers to orange fruit from the genotype or variety Valencia which usually mature late in the respective harvest season. Examples of suitable Valencia oranges include Florida Valencia, California Valencia and Brazilian Valencia. Juice extracted from Valencia oranges, especially Florida Valencia, tends to have a stronger "fresh" aroma/flavor character and a thinner, less pulpy texture.

As used herein, "non-Valencia oranges" refers to all remaining oranges which usually mature in the early to middle part of the harvest season. Examples of suitable non-valencia oranges include the Florida Early/Midseason oranges (Hamlin, Parson Brown and Pineapple), Brazilian varieties such as Pera Rio and Natal, as well as tangerines, mandarin oranges, blood oranges and navel oranges. Juice extracted from non-Valencia oranges tends to have a less strong "fresh" aroma/flavor character and a thicker, more pulpy texture compared to that extracted from Valencia oranges.

The present citrus mixture can comprise from about 1% to about 99% juice sacs and from about 1% to about 99% free juice. Preferably, the mixture will comprise from about 1% to about 90% juice sacs and from about 10% to about 99% free juice, and more preferably from about 5% to about 90% juice sacs and from about 10% to about 95% free juice.

A thick slurry made from mostly juice sacs and less free juice will preferably comprise from about 60% to about 99% juice sacs and from about 1% to about 40% free juice, and more preferably from about 70% to about 95% juice sacs and from about 5% to about 30% free juice. A citrus juice product made of mostly juice and less juice sacs will preferably comprise from about 1% to about 25% juice sacs and from about 75% to about 99% free juice, and more preferably from about 1% to about 5% juice sacs and from about 95% to about 99% free juice. Similarly, a thinner slurry will preferably comprise from about 25% to about 75% juice sacs and from about 25% to about 75% free juice, and more preferably from about 30% to about 60% juice sacs and from about 40% to about 70% free juice.

The juice sacs can comprise from about 1% to about 99% whole juice sacs and from about 1% to about 99% juice sac fragments. Preferably, the juice sacs will comprise from about 40% to about 99% whole sacs and from about 1% to bout 60% fragments, and most preferably from about 60% to about 99% whole sacs and from about 1% to about 40% fragments.

The weight ratio of whole juice sacs and juice sac fragments to free juice is between about 0.02 and about 50. Additionally, the weight ratio of whole juice sacs to juice sac fragments is between about 0.01 and about 100.

The present invention is useful in a wide variety of food and beverage products to enhance flavor and texture. The relative amounts of free juice and juice sacs can vary with product application. Among the possible applications are gelatins, puddings, sorbets, ice creams, pie fillings, baked goods, salad dressings, liquid center candies, cookie fillings, sherbets, yogurt, fruit salads, fruit-filled cookies, fruit bars, frozen confections, and salad mixes. Gelatins and sorbets will preferably contain from about 1% to about 50% of the mixtures of this invention.

The products of the present invention can also be used to make superior citrus juices and beverages, particularly orange juice (e.g., frozen concentrated, chilled, or not from concentrate). The orange juice can be calcium enriched. Other kinds of fruit juices and beverages can also be made. These kinds of products will preferably contain from about 1% to about 25% of the mixtures of the present invention.

The citrus juice beverages can contain beverage ingredients such as water, sugar, vitamins, minerals, artificial sweeteners, flavors, fruit juices, and mixtures thereof. Examples of other fruit juices to be used are apple juice, pear juice, cranberry juice, pineapple juice, and grape juice. Mixtures of citrus juices can also be used, alone or with other juices, as in a citrus punch. Gums, emulsifiers and thickening agents which are commonly used in citrus beverages can also be added. Juice flavor may be modified by adding one or more flavor systems to it.

The citrus beverages can be single strength or concentrated. The citrus juice concentrate of this invention can also be used as a flavorant in beverages, including carbonated beverages, dry beverage mixes, and alcoholic beverages, and in candies, baked goods, and culinary mixes.

The citrus products of this invention can be packed in cans, foil-lined containers, bottles, etc., or by any other method known in the art. If desired, the packaging materials can be impermeable to oxygen and light to increase oxidative stability, and the product can be packed under an inert atmosphere such as nitrogen. The product can be pasteurized or unpasteurized.

Analytical Methods

a. Titratable Peel Oil Content (Scott Oil Method)

4

This method is based on the Scott Oil Method described in Nagy et al, Citrus Science and Technology, Vol. 2 (1977), pp. 506-508. In this method, peel oil is distilled from an isopropanol solution of the juice sample and then titrated with a standard KBr-KBrO$_3$ solution in an acidic medium.

A 0.025N KBr-KBrO$_3$ titrant solution is prepared by diluting 1 part of a 0.1N KBr-KBrO$_3$ solution (from RICCA Chemical Company, Arlington, Texas, Catalog No. 1170), with 3 parts distilled water. An acidic indicator solution is also prepared by mixing together 5 ml. of a 0.1% methyl orange solution with 1000 ml. of a 1:2 mix of concentrated hydrochloric acid and water.

A standard Scott Peel Oil Distillation Apparatus is used in this method. This apparatus essentially consists of a distillation flask, an inclined adaptor and a distillation condenser.

A blank titration value (TB) is obtained by titrating 3 separate mixtures containing 25 ml. of 2-propanol and 10 ml. of the acidic indicator solution with the titrant solution and then dividing the total ml. of titrant solution used by 3.

For single-strength products and feed juices, 25 ml. of a well mixed juice sample is pipetted into the distillation flask containing boiling chips or beads, followed by the addition of 25 ml. of 2-propanol. The mixture in the distillation flask is then heated to a temperature of about 80°-95°C (176°-203°F). Distillate is collected until condensation of water vapor appears on the transfer tube (approximately 35 ml. of distillate). To the distillate is then added 10 ml. of the acidic indicator solution. While being stirred with a magnetic stirrer, the acidic distillate solution is titrated with titrant solution to a colorless endpoint. The volume of titrant solution required to reach the endpoint (TS) is recorded. The % titratable peel oil for the sample is then obtained by the following calculation:

% titratable peel oil = (TS-TB) x 0.0004

For concentrate products, water is added until the sample is diluted to 11.8° Brix. The titratable peel oil content of this diluted sample is then determined by the same method used for single strength products and feed juices.

Peel oil is about 90% to 95% d-limonene. The term "titratable peel oil" refers to the level of d-limonene, plus other minor terpene components such as myrcene, alpha-pinene, and the like present in the citrus juice or citrus juice beverage of the present invention. For purposes of this invention, the level of titratable peel oil (TPO) is calculated by the Scott Method at 11.8° Brix. The Scott KBr-KBrO$_3$ titration method is discussed by Nagy et al. in Citrus Science and Technology, Vol. 2, pp. 506-508 (1977).

## b. Pectinesterase Activity

This method determines the amount of activity of the enzyme pectin methylesterase in the juice, juice concentrates, or juice solids.

A 2M sodium chloride stock solution is prepared by placing 58.45 grams of sodium chloride in a 500 ml. volumetric flask, adding distiled water to the mark and then shaking until the sodium chloride is completely dissolved.

A 1% pectin/salt solution is prepared as follows: a 75 ml. portion of the 2M sodium chloride stock solution is placed in a 1 liter volumetric flask which is then diluted to the mark with distilled water. The blender jar (Waring blender) is then filled approximately 3/4 full with this solution. Using a variable transformer, the blender is run at an approximately 40% setting. Pure citrus pectin (10 ± 0.1 g.) is slowly sifted into the blender jar, followed by the remaining 1/4 of the salt solution. The 1% pectin/salt solution is then blended for approximately 1 minute.

Pectinesterase activity in the sample is determined as follows: a 100 ml. portion of the 1% pectin/salt solution is placed in a 250 ml. beaker which is brought to a temperature of 35°C ± 1°C (95°F ± 2°F) by using a water bath. A 10 ml. juice concentrate sample diluted to 11.8° Brix is then pipetted into the solution in the beaker. If pectinesterase activity is being determined on a juice solids sample, 10 g. of solids is added to the solution in the beaker. A magnetic stirrer is placed in the solution, followed by insertion of pH meter electrodes (Titrimeter II Fep, Fisher Scientific Co., Pittsburgh, PA 15219) and then the solution is stirred slowly. Enough 0.10N NaOH solution is added to raise the pH of the solution to just barely over 7.5, e.g. 7.6. When the pH of the solution lowers to exactly 7.5, 0.02N NaOH is added for 10 minutes at a rate that will hold the pH as near 7.5 as possible. The milliliters of 0.02N NaOH required during this 10 minute period are used in the following calculation to determine pectinesterase activity (P.E. Units) of the juice concentrate sample per °Brix:

P.E. Units per °Brix = [(milliliters of 0.02N NaOH) x 0.02 x 100]/°Brix of Sample

## c. Glycosides Content

### Principal

Flavonoid glycosides (mainly hesperidin in orange and naringen in grapefruit) form yellow complex with diethylene glycol in an alkaline solution. Since glycosides are mainly associated with pulp membrane, this analysis can indicate the amount of pulp or membrane material due to different front end processing conditions (i.e., extraction, finishing and centrifugation).

Reagent

Diethylene glycol (2,2″ - dihydroxyethyl ether), reagent grade, dilute to 90% (v/v) with dist. water.
Hesperidin (80% purity or higher)
4N NaOH solution (16g/100ml)
0.1 N NaOH solution (4g/1000ml)
Glacial acetic acid

Equipment

Spec. 20 or 21 spectrophotometer (Bausch & Lomb, Rochester, NY 14603)
20 mesh screen
Vortex mixer
Repipet Dispenser (20 ml) (#13-687-56, Fisher Scientific Co., Pittsburgh, PA 15219)
Eppendorf Digital Pipettes (100-1000 UL) (Fisher Cat. #21-278-43c)
Tips for Eppendorf (Blue) (Fisher Cat. #21-372-2)
18x150 mm disposable test tubes
Test tube rack

Procedure

Standard Curve:

1. Prepare a stock solution containing 240 mg of hesperidin per 100 ml by dissolving 300 mg of 80% pure hesperidin into 80 ml of 0.1N NaOH, adjusting pH to 7.0 with glacial acetic acid and making up to final volume with distilled water.
2. Prepare standard solutions containing 40, 80, 120 and 180 mg per 100 ml from the freshly made stock solution. Standard solutions are not stable and should be used immediately.
3. Place 15 18 x 150 mm test tubes into a test tube rack and label them 1 through 5 in triplicate.
4. Pipet 5 ml of 90% diethylene glycol into each test tube.
5. Pipet 0.1 ml of each standard solution into each test tube.
6. Mix well with a Vortex mixer.
7. Add 0.1 ml of 4N NaOH into second and third test tube of each triplicate and mix well with a Vortex mixer.
8. Allow 45 minutes for the full development of yellow color. (It takes about 40 minutes for the development of a stable yellow color depending on the concentration. Once the color is developed, it is stable for one hour or longer).
9. Use first sample (standard + diethylene glycol) to zero Spec. 21 at 420 nm and record absorbency at 420 nm for each standard solution. Average 2 readings at each concentration.
10. Plot a standard curve or use a calculator to find out the linear regression equation:

$$A420 = aC (mg/100 ml) + b$$

where "A420" = Absorbance at 420 nm UV,
"a" = calibration coefficient, and
"b" = slope of linear regression plot.
Note: Make up a new standard curve for each new bottle of diethylene glycol.

Sample Measurement:

1. Juice should be free of sensible pulp (screen through a 20 mesh screen).
2. Label 3 test tubes for each sample to be analyzed. (6 samples can be analyzed per batch.)
3. Pipet 5 ml of diethylene glycol into each test tube.
4. Add 0.1 ml of sample into each tube and mix thoroughly with a Vortex mixer.
5. Add 0.1 ml of 4N NaOH into the first and second test tube and mix thoroughly with a Vortex mixer.
6. Allow 45 minutes for the yellow color to develop fully. (Before 40 minutes the yellow color intensity is very time dependent).
7. Use the blank in the third tube to zero the Spec. 21 a 420 nm and read absorbency at 420 nm for each sample in the second test tube.
Find out mg/100 ml of glycosides for each sample from the standard curve or linear regressional equation.

d. Sinking Pulp Mean Diameter

Particle size of orange juice sinking pulp was analyzed with a Model 4300 analyzer with an E-100 sensor (HIAC/ROYCO Instrument Div., Menlo Park, CA 94025). The data was calculated with an IBM PC and SDS software. The calibration curve was obtained using standard particles ranging from 100 to 600 microns. The calibration chart is shown in the attached Table 1.

## TABLE 1

| Channel | Size | Calc. (millivolts) |
|---|---|---|
| 1 | 20.00 | 9 |
| 2 | 30.00 | 13 |
| 3 | 40.00 | 19 |
| 4 | 50.00 | 26 |
| 5 | 60.00 | 34 |
| 6 | 70.00 | 44 |
| 7 | 80.00 | 56 |
| 8 | 90.00 | 69 |
| 9 | 100.00 | 84 |
| 10 | 110.00 | 100 |
| 11 | 120.00 | 117 |
| 12 | 130.00 | 136 |
| 14 | 140.00 | 156 |
| 15 | 160.00 | 202 |
| 16 | 170.00 | 226 |
| 17 | 180.00 | 253 |
| 18 | 210.00 | 340 |
| 19 | 240.00 | 441 |
| 20 | 270.00 | 554 |
| 21 | 300.00 | 681 |
| 22 | 330.00 | 820 |
| 23 | 360.00 | 972 |
| 24 | 390.00 | 1137 |
| 25 | 420.00 | 1315 |
| 26 | 450.00 | 1506 |

0 296 144

## TABLE 1

| Channel | Size | Calc. (millivolts) |
|---|---|---|
| 27 | 500.00 | 1852 |
| 28 | 550.00 | 2233 |
| 29 | 600.00 | 2650 |
| 30 | 650.00 | 3102 |
| 31 | 750.00 | 4111 |
| 32 | 850.00 | 5259 |

Sensor Type:        Light Blockage

Sensor Serial #:    8603002

Calibration #:      1

Sensor Range

    From Channel:   1

    To Channel:     32

Single strength orange juice was screened through a 20 mesh screen prior to the analysis. 10 ml. sample was loaded into 1000 ml. of distilled water in the sampler and the entire diluted sample was flowed through the sensor for counting. Raw data was converted into particle size in microns based on volume distribution.,

### e. Viscosity

A Brookfield LVTD rotational viscometer (Brookfield Engineering Labs, Inc., Stoughton, MA 02072) is set up with the UL-adaptor being placed in a 25°C (77°F) waterbath. Into the sample cup of the UL-adaptor is poured 16 ml of a viscosity standard (known viscosity of 5 to 10 centipoise). The viscosity standard in the sample cup is allowed to equilibrate in the waterbath for 10 minutes before readings are taken at 3, 6, 12, 30 and 60 rpms. The known viscosity of the viscosity standard is divided by the digital reading at each rpm to determine the response factor.

Sensible pulp (juice sacs) is removed from the juice sample (solids content of 11.8° Brix) by passing it through a 20 mesh screen. (For concentrate products, water is added to dilute the juice sample to 11.8° Brix prior to pulp removal.) Into the sample cup of the UL-adaptor is poured 16 ml. of the screened sample. The UL-adaptor of the viscometer is placed in an 8°C (46°F) waterbath. The screened juice sample is allowed to equilibrate in the waterbath for 15 minutes before readings are taken at 3, 6, 12, 30 and 60 rpms. The viscosity of the juice sample is determined by multiplying the digital reading by the response factor. Average viscosity = Σ viscosity (cps) at each rpm/5.

### f. Quantitative Analysis of Whole Orange Juice Aroma/Flavor by Tissue Homogenization/Solvent Extraction Followed by Two Dimensional Gas Chromatography

This method provides an analysis of whole juice aroma/flavor volatiles by solvent extraction of tissue homogenized orange juice products followed by injection into a two dimensional gas chromatography system. Processing of the raw data is performed by a data system which automatically calculates the part per billion concentration of calibrated compo nents. An internal standard, cyclohexanone, is used to calculate relative response factors. The percent purity of compounds assayed is used to establish the actual amount of the respective calibrated compounds in order to calculate their detector response factors (See Table 2). This procedure does not need a weight adjustment to compensate for nonvolatile components in whole juice products analyzed because each component is calibrated individually. This methodology is good only for whole orange juice products produced by the procedures described herein.

Instrumental Procedure:

Instrumentation

A Hewlett-Packard 5880A G.C. with a split/splitless column injector and a Model 7673 automatic liquid sample injector is used. The instrument is equipped with a Level 4 data terminal. For two dimensional gas chromatographic analyses the instrument is equipped with an ultra-low volume six-port column switching valve enclosed (Valco Instruments Co., Inc., Houston, TX 77055) enclosed in a thermostatted valve oven maintained at 230°C (446°F). The oven is fitted with a polar front column (DB WAX, 0.32 mm. x 30 m., 0.5 um. film thickness, J&W Scientific) and a nonpolar back column (DB5, 0.32 mm. x 30 m., 1 um. film thickness, J&W Scientific, Inc., Rancho Cordova, CA 95670). A blank length of fused silica tubing (2 m. x 0.32 mm.) is placed at the head of the front column to serve as a retention gap to affect phase focusing of the injected samples. A flame ionization detector is used for detection. For quantitation the analog detector signal is presented to a Nelson Analytical, Inc., (Cuportino, CA 95014) XTRA CHROM II Data System based on a Hewlett-Packard (Palo Alto, CA 94304) 9000 Series 300 Desktop Computer and Nelson Analytical's hardware and software. The data system is used for processing of raw detector data and calculation of the results as part per billion concentration.

Instrument Conditions
Air: 250 ml./min.
Hydrogen: 30 ml./min.
Hydrogen (carrier): 1.7 ml./min. (front column); 1.4 ml./min. (back column)
Helium (make-up): 25 ml./min.
Injector Splitflow: 23:1 column flow
Septum purge: 3 ml./min.
Injection volumn: 5 ul

Temperature Profile

The oven is equilibrated for one minute at the initial temperature before injection. Initial over temperature is 30°C (86°F) for 11 min. The oven is then programmed to rise at 2°C/min. to 80°C (176°F). All components eluting from the front column are detected to this point. The column flow is then switched to flow from the front column to the head of the back column and the oven temperature ramped to 230°C (446°F), held for 11 min. and then ramped back down to 80°C (176°F). During this time all components eluting from the front column are cryotrapped on the head of the back column and held until column flow is switched back to the individual columns. The oven temperature is then programmed from 80°C (176°F) to 110°C (230°F) at 2°C/min. followed by a ramp at 3°C/min. to a final temperature of 230°C (446°F) where it is held for 10 minutes. This affects the separation and detection of the thermally focused compounds from the back column.

Analytical Sample Preparation:

Whole juice, 76.2 g., is weighed into a 200 ml. glass container. Add 8 ml. of internal standard solution in methylene chloride (internal standard solution contains 0.0294 mg./ml. cyclohexanone). Next add 8 ml. of a saturated salt solution and mix with a tissue homogenizer (Tekmar Co., Cincinnati, OH 45222, Model SDT1810) for 30 seconds. Pour the mixture into two 50 ml. Teflon centrifuge tubes and place these into a centrifuge head. Place centrifuge head plus tubes into a -25°C (-13°F) freezer until frozen solid. Remove centrifuge head containing frozen homogenate into centrifuge and centrifuge at 10,000 G for 30 min. Remove tubes from centrifuge head and place in refrigerator or 0°C (32°F) freezer until ready to separate the methylene chloride layer for analysis (Note: not more than one hour). Using a 250 ul. positive displacement pipet, place 500 ul. of the methylene chloride extract into an amber autosampler vial with a Teflon-lined crimped top. Sample can be analyzed immediately or else placed in the freezer until ready to analyze.

TABLE 2

## STANDARD CALIBRATION SOLUTION

| Peak | ppb | Ret. Time | Area/Amount | I.S./Compound Area Ratio | Compound Name |
|---|---|---|---|---|---|
| 1 | 12440 | 1.95 | 0.26350 | 0.33665 | Acetaldehyde |
| 2 | 84059 | 4.59 | 0.01470 | 0.12694 | Methanol |
| 3 | 844258 | 5.97 | 0.07833 | 6.79182 | Ethanol |
| 4 | 1648 | 9.49 | 4.73822 | 0.80209 | alpha-Pinene |
| 5 | 947 | 11.31 | 2.20857 | 0.21485 | Ethyl Butyrate |
| 6 | 360 | 12.57 | 2.72172 | 0.10054 | Ethyl 2-Methyl Butyrate |
| 7 | 160 | 14.77 | 2.26848 | 0.03738 | Hexanal |
| 8 | 853 | 21.9 | 4.40372 | 0.38597 | Myrcene |
| 9 | 55042 | 24.0 | 4.26548 | 24.11235 | Limonene |
| 10 | 346 | 25.8 | 2.48216 | 0.08832 | t-2-Hexenal |
| 11 | 336 | 26.23 | 1.97834 | 0.06829 | 3-Methyl 1-Butanol |
| 12 | 359 | 27.80 | 2.82679 | 0.10414 | Ethyl Hexanoate |
| 13 | 3086 | 30.87 | 3.15459 | 1.00000 | Cyclohexanone (I.S.) |
| 14 | 1553 | 31.74 | 4.26548 | 0.40129 | Octanal |
| 15 | 98 | 63.12 | 2.63651 | 0.02660 | cis-3-Hexen-1-ol |
| 16 | 59 | 63.18 | 2.91993 | 0.17767 | Hexanol |
| 17 | 162 | 74.24 | 6.98091 | 0.11605 | Octanol |
| 18 | 91 | 74.69 | 1.98991 | 0.01859 | cis-Linalool oxide |
| 19 | 59 | 75.50 | 2.75692 | 0.01674 | trans-Linalool oxide |
| 20 | 1348 | 76.01 | 4.21325 | 0.58324 | Linalool |
| 21 | 314 | 76.22 | 3.32148 | 0.10742 | Nonanal |
| 22 | 1749 | 77.52 | 1.81486 | 0.32597 | Ethyl 3-Hydroxy Hexanoate |
| 23 | 50 | 77.94 | 4.15767 | 0.02136 | Limonene Oxide A |
| 24 | 58 | 78.43 | 3.80809 | 0.02280 | Limonene Oxide B |
| 25 | 201 | 79.08 | 4.31626 | 0.08914 | Citronellal |
| 26 | 409 | 80.75 | 3.91055 | 0.16432 | Terpinen-4-ol |

TABLE 2

## STANDARD CALIBRATION SOLUTION
### (continued)

| Peak | ppb | Ret. Time | Area/Amount | I.S./Compound Area Ratio | Compound Name |
|---|---|---|---|---|---|
| 27 | 369 | 81.42 | 4.06139 | 0.15405 | alpha-Terpineol |
| 28 | 1384 | 82.01 | 2.32172 | 0.33008 | Decanal |
| 29 | 124 | 84.02 | 2.82844 | 0.03615 | Neral |
| 30 | 190 | 84.31 | 3.87409 | 0.07559 | D-Carvone |
| 31 | 74 | 84.63 | 3.36859 | 0.02567 | Geraniol |
| 32 | 258 | 85.54 | 3.35900 | 0.08914 | Geranial |
| 33 | 181 | 85.99 | 2.42367 | 0.04508 | Perillaldehyde |
| 34 | 169 | 92.60 | 2.09416 | 0.03625 | Dodecanal |
| 35 | 756 | 93.56 | 4.31179 | 0.33501 | beta-Caryophyllene |
| 36 | 11493 | 96.88 | 3.56996 | 4.21372 | Valencene |
| 37 | 287 | 101.00 | 4.22388 | 0.12447 | Nootkatone |

Calculations (Reference Nelson Analytical Version 7.2 of XTRA CHROM II):

ppb concentration of Component =

$$\frac{\text{Area ratio of compound in sample}}{\left(\frac{\text{Area ratio of compound in method}}{\text{Concentration of compound in method}}\right)} \quad \text{X} \quad \text{Dilution Factor}$$

0 296 144

Calibration Procedure by Standard Addition:

Prepare a blank single strength juice to analyze for background before spiking it with the standard calibration solution. To do this obtain first a standard orange juice concentrate being essentially devoid of volatile aroma/flavor components. Dilute the concentrate with water to 50 Brix. Weigh 1.3 gm. of pulp into a glass jar and add 18.88 g. of the 50 Brix concentrate. Dilute with water to 81.3 g. This will yield a single strength juice at 11.8 Brix. Analyze according to the above-described analysis procedure.

Next prepare a spiked blank single strength juice. Weight 18.88 g. of the 50 Brix concentrate used to prepare the blank juice above and add 1.3 gm. of pulp. Add a known amount of the standard calibration mix such that the final concentrations achieved will approximate that which might be found in a typical hand squeezed juice. Mix well and then dilute to 81.3 g. with water to yield a 11.8 Brix single strength juice. Analyze according to the above described analysis procedure. Subtract the coincident peak areas found in the blank sample analysis from the calibration component peak areas obtained in the analysis of the spiked blank sample for each calibrated compound, respectively. The resulting corrected areas obtained for the spiked calibration compounds are used for the generation of response factors by the data station method generator for the quantitation of the compounds of interest in whole juice products. The methodology is known to be sensitive to matrix changes known to occur between different product types. Individual calibration is required between these product types with standard addition to insure the best accuracy.

The following examples are intended to further illustrate the present invention, and are not intended to limit the scope of the invention which is defined by the claims.


Example 1


A slurry containing approximately 60% free juice and 40% whole juice sacs and sac fragments is made from Florida Valencia oranges. The oranges are first washed in a dilute bleach solution and dried. Then the oranges are peeled manually with a knife, or in the alternative peeled with a citrus fruit peeling machine described in U.S. Patent 3,700,017 of Vincent et al., issued October 24, 1972 (incorporated by reference herein). The peel is cut cleanly from the inner fruit portion of the orange in such a manner that substantially all of the peel and a thin layer of the fruit portion is sliced away. The cut is made deep enough to make sure that all of the peel has been cleanly removed. Very little contamination of the fruit by undesirable peel oil and other peel components occurs.

The peeled orange fruit balls obtained are next cut lengthwise, parallel to the core, into quarter sections with a knife. The quartered oranges are then loaded into a screened cylindrical container which is 9" long and 7" in diameter. The cylinder of the container is made of perforated metal screen having 1/4" ID holes with about 1/16" wide screen surrounding the holes, where the holes completely cover the screen. The ends of the container are made of solid metal.

The container is next fitted onto the shaking mechanism paint can shaking machine. An enclosure surrounds the shaking mechanism. The machine is a Red Devil Paint Conditioner, Model No. 5410-02, 115 V, 60 Hz, 5.3 Amp, 1/4 H.P., manufactures by Red Devil, Union, N.J. 07083. The paint can shaking machine is turned on, and the container is shaken vigorously for 2 minutes at 720 cycles per minute. Free juice, whole and broken juice sacs, and seeds smaller than 1/4" go through the screen and are collected in a pan at the bottom of the shaking machine enclosure. Orange membranes, large seeds and some unseparated sacs remain in the container.

A slurry of free juice, juice sacs and small seeds is obtained. The small seeds are removed manually.

The juice sac slurry is pasteurized in a scraped wall heat exchanger at 190°F for 10 seconds, and then rapidly cooled to 40°F.

A process analogous to the one described is used to make a slurry sample having the following characteristics:

|  | Unpasteurized | Pasteurized |
|---|---|---|
| % Juice | 59 | 64.4 |
| % Juice sacs | 41 | 35.6 |
| Peel oil (%) | 0.0026 | 0.0022 |
| Pectinesterase (juice) (PEu/°Brix) | 1.13 | 0.06 |
| Pectinesterase (juice sacs) (PEu/°Brix) | 8.40 | 1.28 |
| Glycosides | 71.30 | 86.46 |
| Sinking pulp (mean diameter) (microns) | - | 247 |
| Viscosity (cps) | 5.67 | 7.23 |
| Limonene (ppm) | 17.92 | 18.87 |
| Acetaldehyde (ppm) | 8.49 | 9.44 |
| Ethyl butyrate (ppm) | 0.34 | 0.37 |
| Valencene (ppm) | 9.32 | 9.56 |
| Limonene/Acetaldehyde | 2.1 | 2.0 |
| Limonene/Ethyl Butyrate | 52.7 | 51.0 |
| Limonene/Valencene | 2.1 | 2.0 |

Example 2

A not from concentrate orange juice containing 2.7 wt% juice sacs is made. A juice/juice sac slurry is produced as described in Example 1. This slurry is diluted with additional juice to make the orange juice product. The additional juice is obtained by making an excess quantity of another slurry, and then feeding this second slurry through a belt press to squeeze out the juice. The belt press used is a Flottweg belt press, type B, capacity 1000 kg./hr., manufactured by Ludwig Bodenstab GmbH and Co. KG, D-8011 Kirchseeon, Alpenstrabe 8C, 527364 Lubo D., West Germany.

The juice sacs from the press are disposed of, and the juice is collected and pasteurized at 170°F for 10 seconds, and then rapidly cooled to 40°F. This pasteurized juice is combined with the pasteurized slurry of Example 1 in percentages of about 92% juice and 8% slurry to make an orange juice containing 2.5% juice sacs. A small amount of flavor materials are also blended in.

Example 3

A juice sac product is made comprising approximately 10% free juice and 90% juice sacs. A juice/juice sac slurry is first made as described in Example 1. Then the slurry is filtered using a 20 mesh screen to make a predominantly juice sacs product.

Example 4

A chilled orange juice is made by combining 15% of the slurry of Example 1 with 85% of an orange juice processed by conventional means.

13

**Claims**

1. A mixture comprising natural citrus juice and juice sacs, wherein the mixture comprises from about 1% to about 99% juice sacs, and from about 99% to about 1% free juice, wherein the peel oil level of the free juice is less than about 0.007%, and wherein the glycosides level of the free juice is less than about 120 mg./100 ml.

2. A mixture according to Claim 1 wherein the peel oil level of the fruit juice is less than about 0.005%.

3. A mixture according to Claim 1 wherein the glycosides level of the free juice is less than about 110 mg./100 ml.

4. A mixture according to Claim 3 wherein the glycosides level of the free juice is less than about 100 mg./100 ml.

5. A mixture according to Claim 1 wherein the pectinesterase level of the free, unpasteurized juice is less than about 2 PEu/° Brix.

6. A mixture according to Claim 1 wherein the viscosity of the free juice is less than about 8 cps at 8°C.

7. A mixture according to Claim 6 wherein the viscosity of the free juice is less than about 7 cps at 8°C.

8. A mixture according to Claim 7 wherein the viscosity of the free juice is less than about 6 cps at 8°C.

9. A mixture according to Claim 1 wherein the sinking pulp of the unpasteurized free juice has a mean diameter of greater than about 250 microns.

10. A mixture according to Claim 9 wherein the sinking pulp has a mean diameter of greater than about 275 microns.

11. A mixture according to Claim 10 wherein the sinking pulp has a mean diameter of greater than about 300 microns.

12. A mixture according to Claim 1 wherein the ratio of limonene to acetaldehyde is less than about 20, the ratio of limonene to ethyl butyrate is less than about 100, and the ratio of limonene to valencene is less than about 10.

13. A mixture according to Claim 12 wherein the ratio of limonene to acetaldehyde is less than about 10.

14. A mixture according to Claim 13 wherein the ratio of limonene to ethyl butyrate is less than about 50.

15. A mixture according to Claim 1 comprising from about 1% to about 90% juice sacs and from about 10% to about 99% free juice.

16. A mixture according to Claim 1 comprising from about 60% to about 99% juice sacs and from about 1% to about 40% free juice.

17. A mixture according to Claim 1 comprising from about 1% to about 25% juice sacs and from about 75% to about 99% free juice.

18. A mixture according to Claim 1 wherein the juice sacs comprise from about 1% to about 99% whole juice sacs and from about 1% to about 99% juice sac fragments.

19. A mixture according to Claim 18 wherein the juice sacs comprise from about 40% to about 99% whole juice sacs and from about 1% to about 60% juice sac fragments.

20. A mixture according to Claim 18 wherein the weight ratio of whole juice sacs and juice sac fragments to free juice is between about 0.01 and about 99.

21. A mixture according to Claim 18 wherein the weight ratio of whole juice sacs to juice sac fragments is between about 0.01 and about 1.5.

22. A frozen concentrated orange juice, a chilled orange juice, or a not from concentrate orange juice comprising from about 1% to about 25% of the mixture of Claim 1.

23. An orange juice according to Claim 22 wherein the juice is calcium enriched.

24. A gelatin comprising from about 1% to about 50% of the mixture of Claim 1.

25. A sorbet comprising from about 1% to about 50% of the mixture of Claim 1.

26. An artificially sweetened citrus beverage comprising from about 1% to about 25% of the mixture of Claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 509 904 (J.A. BRUCE) <br> * claims 1-6 * | 1,19 | A 23 L  2/06 <br> A 23 L  1/212 |
| A | GB-A- 934 348 (J. LYONS & CO. LTD.) <br> * claim 1 * | 1 | |
| D,A | US-A-2 510 679 (J.A. BRUCE) <br> * claim 1 * | 1 | |

TECHNICAL FIELDS
SEARCHED (Int. Cl.4)

A 23 L    2/00
A 23 L    1/00

The present search report has been drawn up for all claims

| Place of search | Date of completion of the search | Examiner |
|---|---|---|
| BERLIN | 26-08-1988 | SCHULTZE D |